# EUROPEAN PATENT SPECIFICATION

(11) **EP 3 785 471 B1**
(45) Date of publication and mention of the grant of the patent: **11.10.2023**
(21) Application number: 18916015.3
(22) Date of filing: 23.04.2018
(51) Int. Cl.: H04W 52/04, H04W 52/02

(54) **NETWORK-AIDED-POWER-SAVINGS TECHNIQUES FOR COMMUNICATION SYSTEMS**
NETZWERKGESTÜTZTE STROMSPARTECHNIKEN FÜR KOMMUNIKATIONSSYSTEME
TECHNIQUES D'ÉCONOMIE D'ÉNERGIE ASSISTÉES PAR RÉSEAU POUR DES SYSTÈMES DE COMMUNICATION

(43) Date of publication of application: 03.03.2021
(73) Proprietor: Qualcomm Incorporated, San Diego, CA 92121-1714 (US)
(72) Inventor: LI, Gaoshan, Beijing 100080 (CN); MAO, Jie, San Diego, CA 92121-1714 (US); CHAWLA, Vivek, San Diego, CA 92121-1714 (US); RU, Congchong, San Diego, CA 92121-1714 (US); KANG, Insung, San Diego, CA 92121-1714 (US); GOROKHOV, Alexei, Yurievitch, San Diego, CA 92121-1714 (US); HE, Linhai, San Diego, CA 92121-1714 (US)
(74) Representative: Bardehle Pagenberg Partnerschaft mbB Patentanwälte Rechtsanwälte
(86) International application number: PCT/CN2018/084065
(87) International publication number: WO 2019/204961

(56) References cited:
- WO-A1-2017/041497
- CN-A- 1 866 779
- CN-A- 105 307 254
- US-A1- 2012 039 279
- US-A1- 2015 271 755
- US-A1- 2015 304 955
- US-A1- 2017 331 670

## Description

### TECHNICAL FIELD

Certain aspects of the present disclosure generally relate to wireless communications and, more particularly, to techniques for network aided power savings, including power regulation based on communicated capability indicators.

### INTRODUCTION

Wireless communications systems are widely deployed to provide various types of communication content such as voice, video, packet data, messaging, broadcast, and so on. These systems may be capable of supporting communication with multiple users by sharing available system resources (e.g., time, frequency, and power). Examples of such multiple-access systems include fourth generation (4G) systems such as LongTerm Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal frequency division multiple access (OFDMA), or discrete Fourier transform-spread-OFDM (DFT-S-OFDM). A wireless multiple-access communications system may include a number of base stations or network access nodes, each simultaneously supporting communication for multiple communication devices, which may be otherwise known as user equipment (UE).

Wireless multiple access communications may be improved by optimizing system resources such as power. UE modem power is a critical resource. Modem power utilization has a direct impact on user experience. UEs in a wireless multiple-access communications system may operate at unnecessarily high modem power levesl while in connected mode. This may cause a UE to have a shortened battery life. Unnecessary time delays may be experienced when power savings techniques are implemented by a UE, independent of network feedback.

US patent application US 2012/039279 A1 discloses a user equipment receiving a data transmission on at least one component carrier (CC) in a plurality of configured CCs, determining acknowledgement/negative acknowledgement (ACK/NACK) information for the data transmission and performing power control for ACK/NACK transmission on a PUCCH based on which CCs in the plurality of configured CCs data is received.

US patent application US 2015/0304955 A1 discloses techniques for scheduling radio resource control connections wherein a network element provides an indication of the scheduled radio resource control connection(s) to a wireless device. A load-based delay between wireless devices and base stations may be used to reduce device power consumption.

US patent application US 2017/0331670 A1 discloses a reporting quality threshold for a parameter related to channel state information (CSI) when performing measurements on a plurality of beams.

US patent application US 2015/0271755 A1 discloses a wireless communication device that reconfigures wireless circuitry to use a number of RF receive signal chains that matches a maximum supportable modulation and coding scheme (MCS) value for each component carrier to MCS values assigned by a wireless network to the respective component carrier.

### BRIEF SUMMARY

Techniques described below relate to improved methods, systems, devices, or apparatuses that support network aided downlink throughput based power savings solutions for communication systems. Generally, the described techniques provide a method for determining a capability indicator for a communications channel, the capability indicator indicative of channel throughput parameters, and transmitting the capability indicator to a receiving device to trigger a power adjustment in advance of transmissions received at the device. In some cases, a base station may transmit a capability indicator to a UE in at least one information element. In some cases, a UE may receive at least one capability indicator and adjust at least one UE power saving parameter in advance of an expected receive transmission based on the capability indicator. Alternatively, a UE may adjust a clock power level based on a maximum scheduled rank received in a capability message. In some examples, a base station may receive an indication of a UE state and modify a downlink scheduled rank based on the received indication.

The present disclosure provides a method of wireless communication at a base station according to claim 1, a method of wireless communication at a user equipment according to claim 2, an apparatus for wireless communication at a user equipment according to claim 7, an apparatus for wireless communication at a base station according to claim 12, a non-transitory computer-readable medium according to claim 13, and a non-transitory computer-readable medium according to claim 14. Preferred embodiments are subject of the dependent claims.

While aspects and embodiments are described in this application by illustration to some examples, those skilled in the art will understand that additional implementations and use cases may come about in many different arrangements and scenarios. Innovations described herein may be implemented across many differing platform types, devices, systems, shapes, sizes, packaging arrangements. For example, embodiments and/or uses may come about via integrated chip embodiments and other non-module-component based devices (e.g., end-user devices, vehicles, communication devices, computing devices, industrial equipment, retail/purchasing devices, medical devices, AI-enabled devices, etc.). While some examples may or may not be specifically directed to use cases or applications, a wide assortment of applicability of described innovations may occur. Implementations may range in spectrum from chip-level or modular components to non-modular, non-chip-level implementations and further to aggregate, distributed, or OEM devices or systems incorporating one or more aspects of the described innovations. In some practical settings, devices incorporating described aspects and features may also necessarily include additional components and features for implementation and practice of claimed and described embodiments. For example, transmission and reception of wireless signals necessarily includes a number of components for analog and digital purposes (e.g., hardware components including antenna, RF-chains, power amplifiers, modulators, buffer, processor(s), interleaver, adders/summers, etc.). It is intended that innovations described herein may be practiced in a wide variety of devices, chip-level components, systems, distributed arrangements, end-user devices, etc. of varying sizes, shapes, and constitution.

### BRIEF DESCRIPTION OF THE DRAWINGS

FIGs. 1 and 2 illustrate an example wireless communication system that supports network aided power savings techniques in accordance with aspects of the present disclosure.
FIG. 3 illustrates an example of a system block diagram that supports network aided power savings techniques for communications systems in accordance with aspects of the present disclosure.
FIG. 4 illustrates an example of a maximum allowed rank mapping table that supports network aided power savings techniques for communications systems in accordance with aspects of the present disclosure.
FIG. 5 illustrates and example process flow that supports network aided power savings techniques for communications systems in accordance with aspects of the present disclosure.
FIG. 6 illustrates an example process flow that supports network aided power savings techniques for communications systems not covered by the appended claims.
FIG. 7 illustrates a block diagram of a system including a UE that supports network aided power savings techniques for communications systems in accordance with aspects of the present disclosure.
FIG. 8 illustrates a block diagram of a system including a UE that supports network aided power savings techniques for communications systems in accordance with aspects of the present disclosure.
FIG. 9 illustrates a block diagram of a system including a UE and a base station that supports network aided power savings techniques for communications systems in accordance with aspects of the present disclosure.
FIG. 10 illustrates a block diagram of a system including a base station that supports network aided power savings techniques for communications systems in accordance with aspects of the present disclosure.
FIG. 11 illustrates a block diagram of a system including a base station that supports network aided power savings techniques for communications systems in accordance with aspects of the present disclosure.
FIGs. 12 and 13 illustrate a method or methods for network aided power savings techniques for communications systems in accordance with aspects of the present disclosure.

### DETAILED DESCRIPTION

Power is an important resource in communication systems, and optimizing its use is vital. A UE may independently adjust its power usage in response to channel throughput by reducing its modem power or the number of receive antennas (or receiving rank) on downlink transmissions. However, a UE may need to monitor a communication channel for a significant amount of time to determine whether to adjust its power. Furthermore, it may take hundreds of milliseconds for a UE to report its updated rank to the network, and this may affect the rank switch speed.

In some cases, a network may not follow the maximum allowed rank reported to it by a UE, and the UE may have to use more antennas to receive downlink transmissions than necessary.

In some scenarios, a UE may limit its rank independent of any feedback and this could jeopardize overall system capacity.

Therefore, there is a need for dynamic network aided downlink throughput based UE power adjustment. For instance, in advance of downlink transmissions, a UE may adjust its power according to a capability indicator generated by a base station, where the capability indicator is representative of downlink data volume.

Aspects of the disclosure are initially described in the context of a wireless communications system. Aspects of the disclosure are further illustrated by a process flow. Aspects of the disclosure are further illustrated by and described with reference to apparatus diagrams, system diagrams, and flowcharts that relate to modulation table determination and CQI reporting.

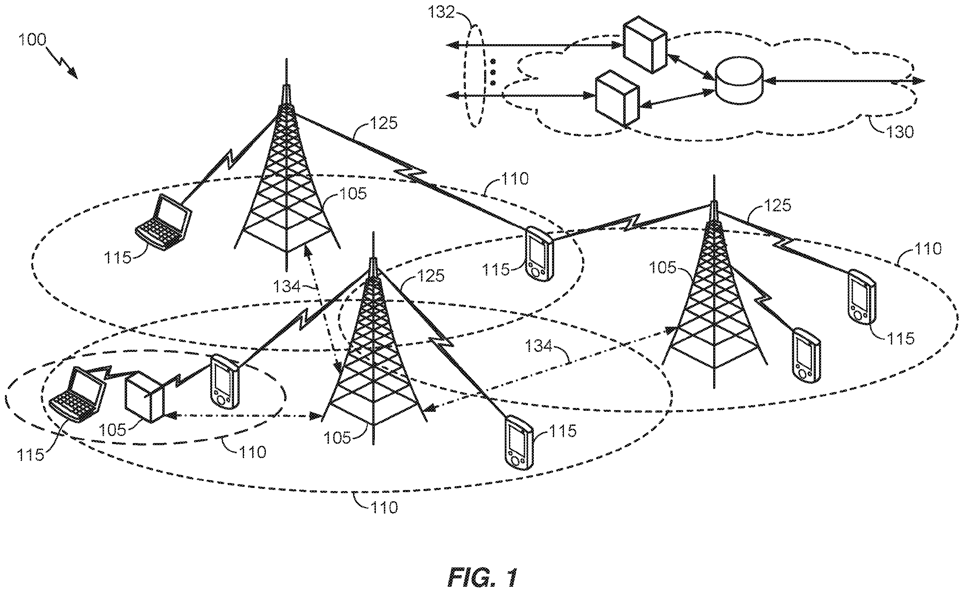

FIG. 1 illustrates an example of a system 100 for wireless communications in accordance with various aspects of the present disclosure. The system 100 includes base stations 105, UEs 115, and a core network 130. In some examples, the system 100 may be a Long Term Evolution (LTE) network, an LTE-Advanced (LTE-A) network, an LTE-A Pro network, or a New Radio (NR) network. In some cases, the system 100 may support enhanced broadband communications, ultra-reliable (e.g., mission critical) communications, low latency communications, or communications with low-cost and low-complexity devices.

Base stations 105 may wirelessly communicate with UEs 115 via one or more base station antennas. Base stations 105 described herein may include or may be referred to by those skilled in the art as a base transceiver station, a radio base station, an access point, a radio transceiver, a NodeB, an eNodeB (eNB), a next-generation Node B or giga-nodeB (either of which may be referred to as a gNB), a Home NodeB, a Home eNodeB, or some other suitable terminology. The system 100 may include base stations 105 of different types (e.g., macro or small cell base stations). The UEs 115 described herein may be able to communicate with various types of base stations 105 and network equipment including macro eNBs, small cell eNBs, gNBs, relay base stations, and the like.

Each base station 105 may be associated with a particular geographic coverage area 110 in which communications with various UEs 115 is supported. Each base station 105 may provide communication coverage for a respective geographic coverage area 110 via communication links 125, communication links 125 between a base station 105 and a UE 115 may utilize one or more carriers. Communication links 125 shown in the system 100 may include uplink transmissions from a UE 115 to a base station 105, or downlink transmissions from a base station 105 to a UE 115. Downlink transmissions may also be called forward link transmissions while uplink transmissions may also be called reverse link transmissions.

A geographic coverage area 110 for a base station 105 may be divided into sectors making up only a portion of the geographic coverage area 110. Each sector may be associated with a cell. For example, each base station 105 may provide communication coverage for a macro cell, a small cell, a hot spot, or other types of cells, or various combinations thereof. In some examples, a base station 105 may be movable and therefore provide communication coverage for a moving geographic coverage area 110.

In some examples, different geographic coverage areas 110 associated with different technologies may overlap, and overlapping geographic coverage areas 110 associated with different technologies may be supported by the same base station 105 or by different base stations 105. The system 100 may include, for example, a heterogeneous LTE/LTE-A/LTE-A Pro or NR network in which different types of base stations 105 provide coverage for various geographic coverage areas 110.

The term "cell" refers to a logical communication entity used for communication with a base station 105 (e.g., over a carrier), and may be associated with an identifier for distinguishing neighboring cells (e.g., a physical cell identifier (PCID), a virtual cell identifier (VCID)) operating via the same or a different carrier. In some examples, a carrier may support multiple cells, and different cells may be configured according to different protocol types (e.g., machine-type communication (MTC), narrowband Internet-of-Things (NB-IoT), enhanced mobile broadband (eMBB), or others) that may provide access for different types of devices. In some cases, the term "cell" may refer to a portion of a geographic coverage area 110 (e.g., a sector) over which the logical entity operates.

UEs 115 may be dispersed throughout the system 100, and each UE 115 may be stationary or mobile. A UE 115 may also be referred to as a mobile device, a wireless device, a remote device, a handheld device, or a subscriber device, or some other suitable terminology, where the "device" may also be referred to as a unit, a station, a terminal, or a client. A UE 115 may also be a personal electronic device such as a cellular phone, a personal digital assistant (PDA), a tablet computer, a laptop computer, or a personal computer. In some examples, a UE 115 may also refer to a wireless local loop (WLL) station, an Internet of Things (IoT) device, an Internet of Everything (IoE) device, or an MTC device, or the like, which may be implemented in various articles such as appliances, vehicles, meters, or the like.

Some UEs 115, such as MTC or IoT devices, may be low cost or low complexity devices, and may provide for automated communication between machines (e.g., via Machine-to-Machine (M2M) communication). M2M communication or MTC may refer to data communication technologies that allow devices to communicate with one another or a base station 105 without human intervention.

In some examples, M2M communication or MTC may include communications from devices that integrate sensors or meters to measure or capture information and relay that information to a central server or application program that can make use of the information or present the information to humans interacting with the program or application. Some UEs 115 may be designed to collect information or enable automated behavior of machines. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples half-duplex communications may be performed at a reduced peak rate. Other power conservation techniques for UEs 115 include entering a power saving "deep sleep" mode when not engaging in active communications, or operating over a limited bandwidth (e.g., according to narrowband communications). In some cases, UEs 115 may be designed to support critical functions (e.g., mission critical functions), and the system 100 may be configured to provide ultra-reliable communications for these functions.

In some cases, a UE 115 may also be able to communicate directly with other UEs 115 (e.g., using a peer-to-peer (P2P) or device-to-device (D2D) protocol). One or more of a group of UEs 115 utilizing D2D communications may be within the geographic coverage area 110 of a base station 105. Other UEs 115 in such a group may be outside the geographic coverage area 110 of a base station 105, or be otherwise unable to receive transmissions from a base station 105. In some cases, groups of UEs 115 communicating via D2D communications may utilize a one-to-many (1:M) system in which each UE 115 transmits to every other UE 115 in the group. In some cases, a base station 105 facilitates the scheduling of resources for D2D communications. In other cases, D2D communications are carried out between UEs 115 without the involvement of a base station 105.

Base stations 105 may communicate with the core network 130 and with one another. For example, base stations 105 may interface with the core network 130 through backhaul links 132 (e.g., via an S1 or other interface). Base stations 105 may communicate with one another over backhaul links 134 (e.g., via an X2 or other interface) either directly (e.g., directly between base stations 105) or indirectly (e.g., via core network 130).

The core network 130 may provide user authentication, access authorization, tracking, Internet Protocol (IP) connectivity, and other access, routing, or mobility functions. The core network 130 may be an evolved packet core (EPC), which may include at least one mobility management entity (MME), at least one serving gateway (S-GW), and at least one Packet Data Network (PDN) gateway (P-GW).

The MME may manage non-access stratum (e.g., control plane) functions such as mobility, authentication, and bearer management for UEs 115 served by base stations 105 associated with the EPC. User IP packets may be transferred through the S-GW, which itself may be connected to the P-GW. The P-GW may provide IP address allocation as well as other functions. The P-GW may be connected to the network operators IP services. The operators IP services may include access to the Internet, Intranet(s), an IP Multimedia Subsystem (IMS), or a Packet-Switched (PS) Streaming Service.

At least some of the network devices, such as a base station 105, may include subcomponents such as an access network entity, which may be an example of an access node controller (ANC). Each access network entity may communicate with UEs 115 through a number of other access network transmission entities, which may be referred to as a radio head, a smart radio head, or a transmission/reception point (TRP). In some configurations, various functions of each access network entity or base station 105 may be distributed across various network devices (e.g., radio heads and access network controllers) or consolidated into a single network device (e.g., a base station 105).

The system 100 may operate using one or more frequency bands, typically in the range of 300 MHz to 300 GHz. Generally, the region from 300 MHz to 3 GHz is known as the ultra-high frequency (UHF) region or decimeter band, since the wavelengths range from approximately one decimeter to one meter in length. UHF waves may be blocked or redirected by buildings and environmental features. However, the waves may penetrate structures sufficiently for a macro cell to provide service to UEs 115 located indoors. Transmission of UHF waves may be associated with smaller antennas and shorter range (e.g., less than 100 km) compared to transmission using the smaller frequencies and longer waves of the high frequency (HF) or very high frequency (VHF) portion of the spectrum below 300 MHz.

The system 100 may also operate in a super high frequency (SHF) region using frequency bands from 3 GHz to 30 GHz, also known as the centimeter band. The SHF region includes bands such as the 5 GHz multiple industrial, scientific, and medical (ISM) bands, which may be used opportunistically by devices that can tolerate interference from other users. The system 100 may also operate in an extremely high frequency (EHF) region of the spectrum (e.g., from 30 GHz to 300 GHz), also known as the millimeter band. In some examples, the system 100 may support millimeter wave (mmW) communications between UEs 115 and base stations 105, and EHF antennas of the respective devices may be even smaller and more closely spaced than UHF antennas. In some cases, this may facilitate use of antenna arrays within a UE 115.

However, the propagation of EHF transmissions may be subject to even greater atmospheric attenuation and shorter range than SHF or UHF transmissions. Techniques disclosed herein may be employed across transmissions that use one or more different frequency regions, and designated use of bands across these frequency regions may differ by country or regulating body.

In some cases, the system 100 may utilize both licensed and unlicensed radio frequency spectrum bands. For example, the system 100 may employ License Assisted Access (LAA), LTE-Unlicensed (LTE-U) radio access technology, or NR technology in an unlicensed band such as the 5 GHz ISM band. When operating in unlicensed radio frequency spectrum bands, wireless devices such as base stations 105 and UEs 115 may employ listen-before-talk (LBT) procedures to ensure a frequency channel is clear before transmitting data. In some cases, operations in unlicensed bands may be based on a CA configuration in conjunction with CCs operating in a licensed band (e.g., LAA). Operations in unlicensed spectrum may include downlink transmissions, uplink transmissions, peer-to-peer transmissions, or a combination of these. Duplexing in unlicensed spectrum may be based on frequency division duplexing (FDD), time division duplexing (TDD), or a combination of both.

In some examples, base station 105 or UE 115 may be equipped with multiple antennas, which may be used to employ techniques such as transmit diversity, receive diversity, multiple-input multiple-output (MIMO) communications, or beamforming. For example, the system 100 may use a transmission scheme between a transmitting device (e.g., a base station 105) and a receiving device (e.g., a UE 115), where the transmitting device is equipped with multiple antennas and the receiving devices are equipped with one or more antennas.

Multiple-In, Multiple-Out (MIMO) communications may employ multipath signal propagation to increase the spectral efficiency by transmitting or receiving multiple signals via different spatial layers, which may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream, and may carry bits associated with the same data stream (e.g., the same codeword) or different data streams. Different spatial layers may be associated with different antenna ports used for channel measurement and reporting. MIMO techniques include single-user MIMO (SU-MIMO) where multiple spatial layers are transmitted to the same receiving device, and multiple-user MIMO (MU-MIMO) where multiple spatial layers are transmitted to multiple devices.

In some cases, the antennas of a base station 105 or UE 115 may be located within one or more antenna arrays, which may support MIMO operations. For example, one or more base station antennas or antenna arrays may be co-located at an antenna assembly, such as an antenna tower. In some cases, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations.

The rank index or rank indicator (RI) of UE 115 indicates how well multiple antenna operate in a wireless communication system. The less correlation there is between each of the multiple antenna in a MIMO configuration, the less interference each antenna may experience. A maximum RI value corresponds to "no correlation between the antenna" or "no interference." For example, in a 2x2 MIMO system (a MIMO system with two transmit antennas and two receive antennas) a maximum rank may correspond to a value of 1 or 2. A maximum rank of 2 in a 2x2 MIMO system indicates there is no interference between each of the two transmit and two receive antennas. A maximum rank of 1 implies the signal from the two transmit antennas is perceived by the UE as a single signal from a single antenna (this is worst case scenario).

A UE 115 may estimate a downlink channel and report a recommended rank indicator (RI) to the base station 105. A UE 115 may also report a channel quality indicator (CQI), i.e., how good or bad a channel is; and a precoding matrix indicator (PMI) required for MIMO precoding in the downlink. RI, CQI and PMI are dynamically computed and together, form a set of recommended channel properties for the base station 105. A base station 105 may use these indicators in the optimization of resource allocation among various UEs requesting service. In other words, the base station 105 may perform corresponding downlink scheduling based on RI/PMI/CQ feedback from the UE 115. RI and CQI are sent from the UE 115 to base station 105 on a Physical Uplink Control Channel (PUCCH). The number of data streams or layers a base station 105 sends in a downlink transmission, using the same frequency is defined as the rank. For example, if a UE 115 reports a rank of 1 to the base station 105, the base station 105 will transmit data to UE 115 in Tx diversity mode. If a UE 115 reports a rank indication of 2, the base station 105 may start sending data in MIMO mode.

The term "carrier" refers to a set of radio frequency spectrum resources having a defined physical layer structure for supporting communications over a communication link 125. For example, a carrier of a communication link 125 may include a portion of a radio frequency spectrum band that is operated according to physical layer channels for a given radio access technology. Each physical layer channel may carry user data, control information, or other signaling. A carrier may be associated with a pre-defined frequency channel (e.g., an E-UTRA absolute radio frequency channel number (EARFCN)), and may be positioned according to a channel raster for discovery by UEs 115. Carriers may be downlink or uplink (e.g., in an FDD mode), or be configured to carry downlink and uplink communications (e.g., in a TDD mode). In some examples, signal waveforms transmitted over a carrier may be made up of multiple sub-carriers (e.g., using multi-carrier modulation (MCM) techniques such as OFDM or DFT-s-OFDM).

The organizational structure of the carriers may be different for different radio access technologies (e.g., LTE, LTE-A, LTE-A Pro, NR, etc.). For example, communications over a carrier may be organized according to TTIs or slots, each of which may include user data as well as control information or signaling to support decoding the user data. A carrier may also include dedicated acquisition signaling (e.g., synchronization signals or system information, etc.) and control signaling that coordinates operation for the carrier. In some examples (e.g., in a carrier aggregation configuration), a carrier may also have acquisition signaling or control signaling that coordinates operations for other carriers.

Physical channels may be multiplexed on a carrier according to various techniques. A physical control channel and a physical data channel may be multiplexed on a downlink carrier, for example, using time division multiplexing (TDM) techniques, frequency division multiplexing (FDM) techniques, or hybrid TDM-FDM techniques. In some examples, control information transmitted in a physical control channel may be distributed between different control regions in a cascaded manner (e.g., between a common control region or common search space and one or more UE-specific control regions or UE-specific search spaces).

A carrier may be associated with a particular bandwidth of the radio frequency spectrum, and in some examples the carrier bandwidth may be referred to as a "system bandwidth" of the carrier or the system 100. For example, the carrier bandwidth may be one of a number of predetermined bandwidths for carriers of a particular radio access technology (e.g., 1.4, 3, 5, 10, 15, 20, 40, or 80 MHz). In some examples, each served UE 115 may be configured for operating over portions or all of the carrier bandwidth. In other examples, some UEs 115 may be configured for operation using a narrowband protocol type that is associated with a predefined portion or range (e.g., set of subcarriers or RBs) within a carrier (e.g., "in-band" deployment of a narrowband protocol type).

Devices of the system 100 (e.g., base stations 105 or UEs 115) may have a hardware configuration that supports communications over a particular carrier bandwidth, or may be configurable to support communications over one of a set of carrier bandwidths. In some examples, the system 100 may include base stations 105 and/or UEs that can support simultaneous communications via carriers associated with more than one different carrier bandwidth. The system 100 may support communication with a UE 115 on multiple cells or carriers, a feature which may be referred to as carrier aggregation (CA) or multi-carrier operation. A UE 115 may be configured with multiple downlink CCs and one or more uplink CCs according to a carrier aggregation configuration. Carrier aggregation may be used with both FDD and TDD component carriers.

Wireless communications systems such as an NR system may utilize any combination of licensed, shared, and unlicensed spectrum bands, among others. In some examples, NR shared spectrum may increase spectrum utilization and spectral efficiency, specifically through dynamic vertical (e.g., across frequency) and horizontal (e.g., across time) sharing of resources.

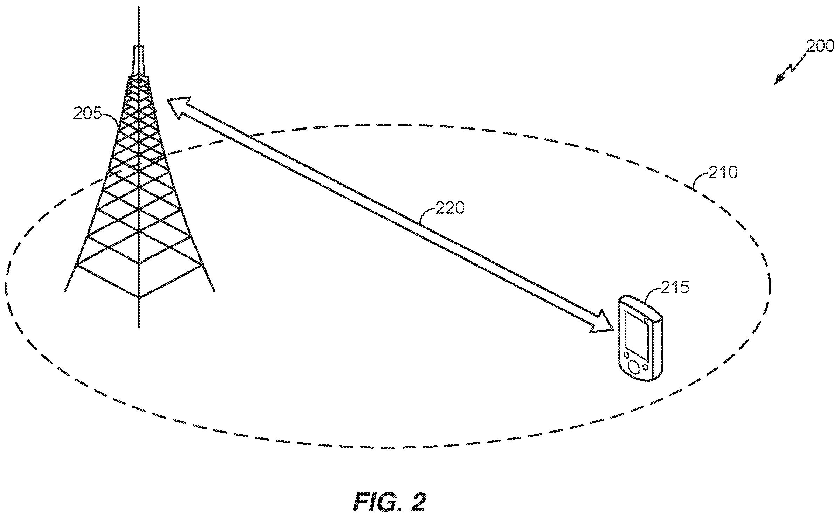

FIG. 2 illustrates an example of a system 200 that supports network aided power savings techniques for communications systems in accordance with various aspects of the present disclosure. In some examples, the system 200 may implement aspects of the system 100. The system 200 may include a base station 205 and a UE 215, which may be examples of the corresponding devices described with reference to FIG. 1. In the example of FIG. 2, the system 200 may operate according to a radio access technology (RAT) such as a fourth generation (4G) LTE or LTE-A, 5G or NR, although techniques described herein may be applied to any RAT and to systems that may concurrently use two or more different RATs.

The base station 205 may establish a connection (e.g., a bidirectional link 220) with the UE 215 within a coverage area 210. The base station 205 and the UE 215 may communicate one or more frames using the bidirectional link 220. Each frame may include ten 1ms subframes numbered from 0 to 9 (e.g., SF₀ through SF₉).
A subframe may be further divided into two 0.5ms slots, each of which contains 6 or 7 modulation symbol periods. In some cases, the subframe may be the smallest scheduling unit, also known as a TTI.

In some examples, the base station 205 and the UE 215 may establish the bidirectional link 220 by performing an RRC procedure (e.g., a cell acquisition procedure, a random access channel (RACH) procedure, an RRC connection procedure, an RRC configuration procedure). In some cases, during the RRC procedure the base station 205 may allocate resources (e.g., time and frequency resources) for the UE 215. An RRC information element (IE) may be used to convey information on bidirectional link 220. An IE may be used to indicate a security header type, EPS mobility, UE network capability, etc. Specific IEs are further defined in 3GPP TS 29.282 V8.1.0. An IE may be an individual field in the RRC message or a particular structure in the RRC message. Specific IE structure is further defined in 3GPP TS 29.282 V8.1.0.

Resources allocated by base station 205 may include a number of resource elements that span one modulation symbol period by one sub-carrier. Each resource element may carry two, four, or six physical channel bits depending on a modulation scheme (e.g., 16QAM, 64QAM). The base station 205 may group resource elements into resource blocks (RBs), each RB may span 0.5ms (i.e., one slot) by 180kHz (i.e., 12 sub-carriers).

The base station 205 may transmit a message including control information to the UE 215 via bidirectional link 220. In an example, the message may be an RRC message, containing at least one IE field which the base station 205 may communicate to the UE 215 via RRC signaling. In another aspect of present examples, the base station 205 may transmit downlink information on a physical downlink control channel (PDCCH) or a sPDCCH.

A downlink message from base station 205 may transmit a control message. The control information in the message may indicate to the UE 215 forthcoming data transmission and information on how the data will be transmitted to the UE 215, for example, configuration parameters such as an amount of data, allocated resources, CQI reporting configuration, and a modulation coding scheme (MCS) index. MCS in 802.11n refers to the combination of the radio carrier modulation scheme e.g. BPSK through 64QAM; and the coding scheme, e.g. rate ½ through 5/6, that are used when transmitting data. Each MCS has an associated data rate. E.g. MCS 0 equates to 7.2Mbps, MCS 15 to 300Mbps, and MCS 31 up to 600Mbps using a short 400ns guard interval. The number of bits that may be transferred in a certain transport block size depends on the MCS and the number of resource blocks assigned to the UE 115.

The UE 215 may receive and demodulate control information received from the base station 205. For example, the UE 215 may decode the control information to identify information included within e.g., upcoming data transmission on a sPDSCH and information on how the data will be transmitted. In some cases, upon receiving the control information, the UE 215 may perform a measurement (e.g., SINR) to identify one or more metrics. The UE 215 may perform this measurement to identify a channel quality (e.g., of a sPDCCH transmission) related to the data channel. The UE 215 may determine a code rate for the subband of the downlink control channel based on the measurement. In some examples, the UE 215 may determine a CQI, a pre-coding matrix indicator (PMI), a precoding type indicator (PTI), or a rank indicator (RI) based on the measurement.

UE 215 may adjust its power mode. Adjustments may be based on a variety of factors, including for example, control information received from the base station 205, or downlink throughput. Throughput in general, may refer to the rate of successful message delivery over a communication channel. System throughput may refer to the sum of data rates that are delivered to all terminals in a wireless multiple-access communications system. Maximum throughput of a communication channel is related to channel capacity and may refer to the maximum possible quantity of data that may be transferred on a communication channel under ideal circumstances. Throughput of a communication system may be affected by various factors including interference on a communication channel, UE 215 user behavior, UE 215 processing power, etc. High downlink throughput may refer to successful message delivery on the downlink at a capacity that approaches maximum throughput. Low downlink throughput may refer to unsuccessful message delivery on the downlink.

UE 215 may adjust its power mode in accordance with channel throughput levels. For instance, if downlink throughput is high, UE 215 may remain in a high power mode, whereby the UE 215 uses a high, or maximum level of device power to receive transmissions. Alternatively, if channel throughput is low (e.g., no data is being transmitted to UE 215 from base station 205), UE 215 may enter a low power mode, whereby the UE 215 uses minimum device power to receive transmissions e.g., UE in a deep sleep mode.

In some examples, a UE 215 may adjust its receiving rank based on channel throughput. For instance, if downlink throughput is high, UE 215 may use a higher rank for received transmissions. In other words, UE 215 may use more antennas or receive paths to receive transmissions. Alternatively, if channel throughput is low (e.g., no data is being transmitted to UE 215 from base station 205), UE 215 may use a lower rank (fewer antennas) for received transmissions.

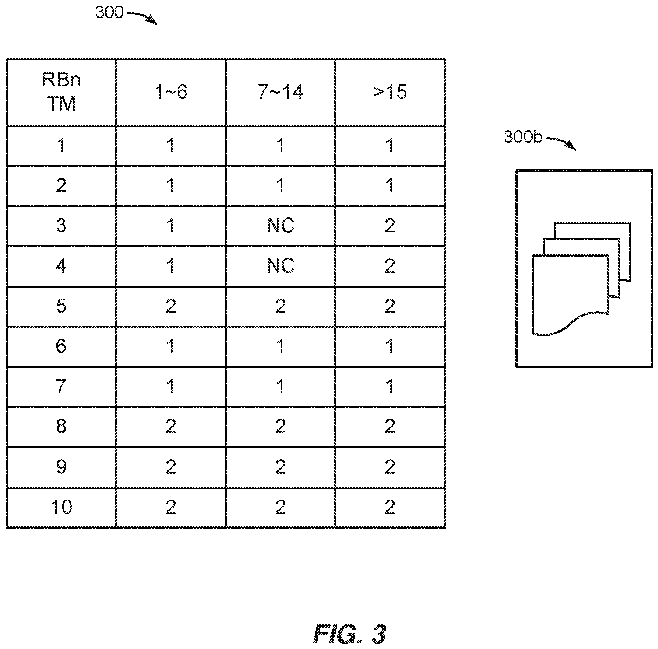

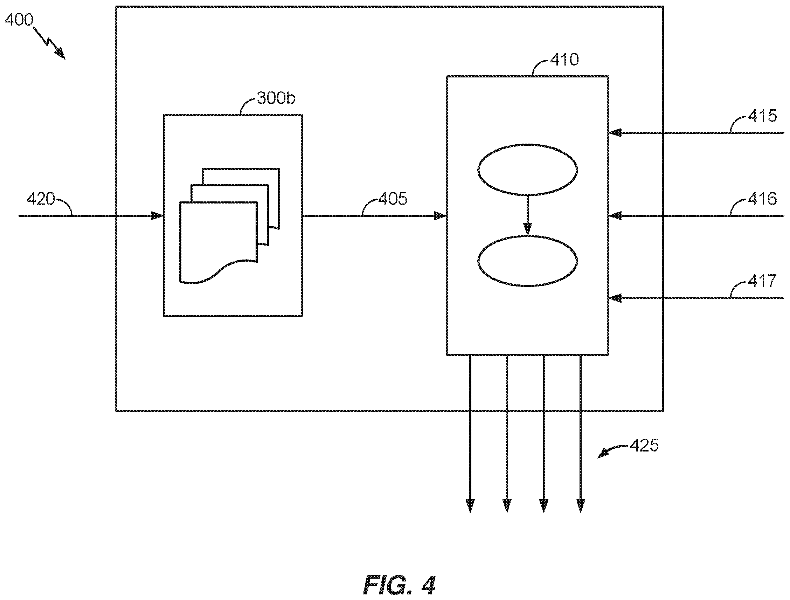

FIG. 3 illustrates an example rank mapping table that may be used by a UE 215 to determine a maximum allowed rank of received transmissions. Exemplary rank mapping table 300 in FIG. 3 supports a 2x2 MIMO system and may be implemented by aspects of system 100 and 200 of FIG. 1, and FIG. 2, including a base station 205 and a UE 215. A 2x2 MIMO system is used in the example of FIG. 3 (and FIG. 4) for purposes of illustration. Similar tables supporting differently configured MIMO systems may be used in disclosed examples.

In rank mapping table 300 illustrated in FIG 3, RBₙ refers to the average number of resource blocks (RBs) in a current rank indication (RI) reporting cycle. The average RBs of all downlink grants fall into this RI window. This may correspond to an 80ms to 160ms timeframe. In FIG. 3, transmission mode (TM), may refer to downlink mode 1, 2, 3, 4, 5, 6, 7, 8, 9, or 10 and a MIMO scheme corresponding to each mode. For example, TM 1 mode uses only one transmit antenna, TM 2 is a default MIMO mode and corresponds to transmit diversity mode, TM 3 refers to open loop spatial multiplexing with cyclic delay diversity (CDD), TM 4 refers to closed loop spatial multiplexing mode, etc. Transmission modes in general, including two uplink transmission modes are further defined in the 3GPP standards such as 3GPP release 12. A transmission mode designated for a UE 215 may be provided in an RRC message when the UE 215 establishes an RRC connection to the network.

As illustrated in FIG. 3, in some examples, a maximum allowed rank number may be correlated to RB sizes 1-6, 7~14, or RB sizes greater than 15. A maximum allowed rank number may also be correlated to transmission modes 1-10. For instance, for RBs greater than 15, a UE 215 may select a maximum rank of 1 for TM 1. In another example, for RB sizes between 1-6, and for TM 4, a UE 215 may select a maximum rank of 1. In some examples, TM 5 and TM 10 may default to rank 2 for all RB sizes.

FIG. 4 illustrates an example system block diagram including an example rank mapping table and an example rank and receiver state machine. Exemplary rank mapping table 300 or (tables 300b) may be incorporated in exemplary system block diagram 400. Exemplary rank mapping table 300/300b and exemplary rank and receiver state machines 410 together, may operate as an automatic rank and receiver control algorithm that may be used by a UE 215 to determine an active rank (Rx path) or reported rank of received transmissions. In some examples, exemplary system block 400 may be used by UE 215 to determine a power level. In some examples, a lower power level or a power savings mode may correspond to a lower Rx path count, lower DSP clock/voltage, lower DDR clock/voltage, or lower modem peripheral voltage/clock, a deep sleep mode, etc.

In FIG. 4, input to table 300/300b may include throughput indicators 420 such as RB number, MCS and TB size. A rank count state machine 410 may be driven by a maximum allowed rank output 405 from mapping table 300/300b, channel characteristic indicators 415 such as SNR, CRC error count, RI, CQI; traffic characteristics 416 such as grant rank number < N gap statistic information; and channel loading indicators 417 such as RB allocation rate of the entire band, and RSRQ. The state machine may output 425 active Rx path, reported rank, reported CQI and low power levels at which a UE 215 may operate in anticipation of downlink transmissions. In other words, a UE 215 may select an Rx path, or power mode for uplink communication to the base station 205 according to the output of the exemplary system block diagram of FIG. 4.

In some scenarios, base station 205 may have no knowledge of a UE's receiving rank. Thus, there may be a mismatch between downlink channel transmissions and a UE's receiving rank. In some cases, the network or base station 205 may receive rank information reported by a UE 215, but may not apply this information immediately ie, upon receipt. A delay in rank reporting may result in a UE 215 not being able to switch its antenna configuration as fast as throughput change occurs. In TM 3 and TM 4, a delay in rank reporting may correspond to hundreds of ms of delay. In some cases, for instance in TM 8 and TM 9, a base station 205 may ignore the rank reported by the UE 215 and may rely on its own scheduling algorithms to determine rank.

A base station 205 has knowledge of throughput and resource usage of all UEs 215 in a cell. In other words, capacity estimation is known by the base station 205. Thus, network aided UE power savings techniques that enable UE power adaptation in a predictive manner, in accordance with channel throughput are disclosed. Such network aided solutions may help avoid delays of up to hundreds of milliseconds.

In some examples, base station 205 determines a downlink maximum scheduled rank for an anticipated transmission based on channel throughput indicators, and communicates this information to UE 215. Thus, UE 215 determines to use a minimum number of receive paths for an anticipated downlink grant based on this information.

In some examples, a base station 205, in anticipation of downlink throughput, indicates a downlink buffer status to the UE 215. Thus, a UE 215 adjusts its clock power level based on the downlink buffer status. For instance, if the network or base station 205 anticipates low throughput, it may send a corresponding downlink buffer status to the UE 215. Upon receiving the downlink buffer status, a UE 215 may lower its clock speed or modem power.

A message transmitted to UE 215 by base station 205 to indicate a parameter of a downlink transmission, e.g., a downlink buffer status, is referred to as a capability indicator. Receipt of a capability indicator from base station 205 may require a UE 215 to adjust a receiving rank or power level.

In some examples, UE 205 may transmit information to a base station 205 to modify a downlink scheduled rank for specific UE scenarios. For instance, a UE 215 may be in a tune-away state, i.e., the UE may have several antennas or Rx paths tunedaway, or disabled from a receive mode. The UE 215 may notify the network or base station 205 of its tune-away mode. A base station 205 that becomes aware the UE 215 is in a tune-away mode (or other special state) may determine not to send high rank grants to the UE 215 as long as the UE 215 is in this mode. Thus, a base station's *a priori* knowledge of a UEs state may allow for a shortened rank limiting window. Effectively the amount of time required to determine a receiving rank of the UE is reduced.

Alternatively, in some cases, a UE 215 may not want to limit its receiving rank. Thus, UE 215 may communicate this to base station 205. For example, an application or service on a UE 215 may require very limited or no delay for optimum performance. Such a scenario may include a UE application that requires a user to be the first to enter their name in a contest or the first to make a certain selection on an interface. Here, a UE 215 may determine to use a maximum rank for the period the application is in use. UE 215 may notify base station 205 that it will use a maximum rank to receive transmissions for an assigned period of time.

In some examples not covered by the appended claims, a UE 215 may transmit a message to the network or base station 205 to indicate to the base station that the UE is in a particular power state. In some examples, a UE 215 may transmit a message to the base station 205 to indicate some other UE capability. For instance, a UE 215 in a low power state may use low power levels to receive downlink grants. A low power state may correspond to a UE low battery level state, or a UE sleep state. In this case, UE 215 may request base station 205 to use low power downlink grants. On the other hand, a UE 215 may be in a high power state. Here, UE 215 may use higher power levels to receive downlink grants. A UE high power state may correspond being plugged into a power source, (i.e., being charged). In this case, the UE 215 may not have any power limitations, and may request the base station 205 to transmit using high power downlink grants.

A message transmitted to base station 205 by UE 215 to indicate a state of the UE, e.g., a power state, may be referred to as a capability indicator. Receipt of a capability indicator from UE 215 may require a base station 205 to adjust power levels on downlink grants or downlink scheduled grants.

In some examples, a capability indicator may be one or more IE fields. An IE field may be included in an RRC message. According to the present invention, at least one downlink MAC IE is transmitted by base station 205, e.g. a Maximum Scheduled Rank, to inform a UE 215 of an anticipated maximum downlink schedule rank. Based on this information, a UE 215 uses a minimum number of Rx paths to receive the anticipated downlink grant. In some examples, a Downlink Buffer Status IE may be added to inform a UE 215 of a current downlink buffer status. Based on this information, a UE 215 estimates an anticipated downlink average throughput and use this information to adjust its clock power level to fit anticipated downlink throughput. In some examples, this saves power and adds no data delay.

In some examples not covered by the appended claims, an uplink MAC IE may be transmitted by a UE 215 to communicate a maximum target rank throughput, a Maximum Expected Rank IE. A UE 215 may seek to modify the base stations downlink scheduled rank for special cases. For instance, a Maximum Expected Rank IE may be transmitted by UE 215 to inform base station 205 e.g., of UE 215 being in a 5G tune-away state, low delay service state, low battery state, etc.

In some examples not covered by the appended claims, a UE capability transfer IE field may indicate a UE capability. For instance, a UE power savings capability field may enable or disable a downlink throughput power savings mode to indicate whether a UE supports downlink throughput based power savings. A power state field may indicate whether the UE 215 is in a battery limited state or not.

In some examples, more than one capability indicator may be transmitted by a UE 215 or base station 205.

An IE field may be a certain number of bits long, for example an IE field may be 3 bits, or any other number of bits long. In some cases, two downlink IEs may be transmitted, where each IE is 3 bits, or any other number of bits long. In some cases, if downlink MAC IEs have few bits, e.g,, 3 bits, and if there is padding space in a MAC protocol data unit (PDU), these bits may appended and sent on a downlink. In some cases, the two IEs, e.g,, two 3-bit IEs may be sent separately or they may be sent together as a 6-bit IE. In some cases, if there is no padding on the MAC PDU for a certain period of time (e.g. a timeout time), IEs may be appended after a MAC service data unit (SDU).

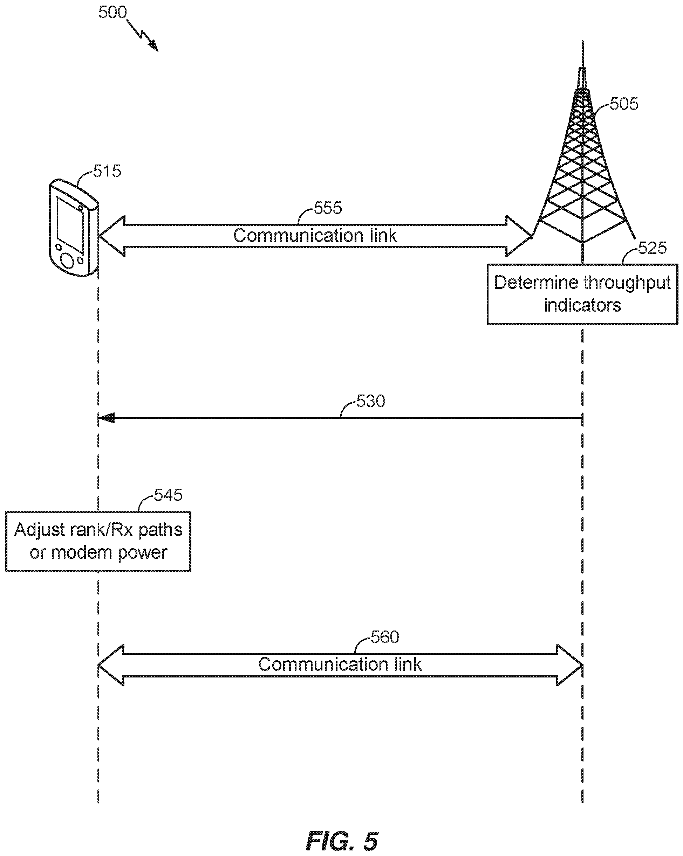

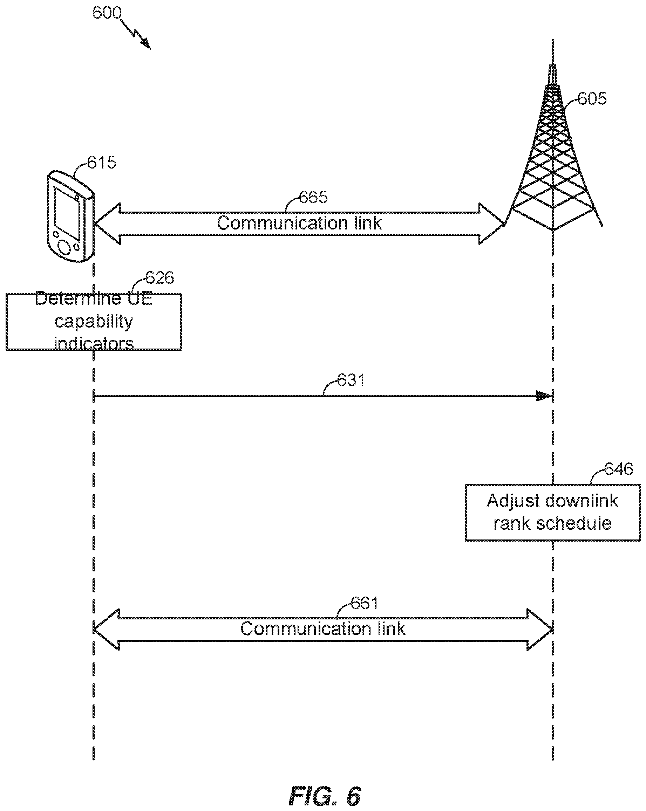

FIGs. 5 and 6 illustrate examples of a process flow 500/600 that supports network aided power savings techniques for communications systems in accordance with aspects of the present disclosure. In some examples, process flow 500/600 may implement aspects of the systems 100 and 200 of FIGs. 1 and 2. The operations of the process flow 500/600 may be implemented by a UE or a base station or its components as described herein. For example, the operations of the process flow 500/600 may be implemented by a base station 605 and a UE 615. In some examples, the base station 605 and the UE 615 may execute a set of codes to control the functional elements of the base station 605 and the UE 615. The base station 605 and the UE 615 may be examples of the corresponding devices described with reference to FIGs. 1 and 2.

In the following description of the process flow 500/600, the operations between the base station 605 and the UE 615 may be transmitted in a different order than the exemplary order shown, or the operations performed by the base station 605 and the UE 615 may be performed in different orders or at different times. Certain operations may also be left out of the process flow 500/600, or other operations may be added to the process flow 500/600.

Referring to FIG. 5, in some examples, the process flow 500 may commence with a communication link 555 between the base station 505 and the UE 515. The base station 505 may establish a connection with the UE 515 (e.g., performing a cell acquisition procedure, random access procedure, RRC connection procedure, RRC configuration procedure). At 525, the base station 505 determines channel throughput or capability indicators. At 530, the base station 505 transmits channel throughput or capability indicators to the UE 515. At 545, the UE 515 configures a UE parameter associated with the received capability indicator message. In some cases, the UE 515 may adjust its receiving rank. In other cases, UE 515 may adjust is modem or clock power, or other forms of power usage. Then, base station 505 may transmit on an updated downlink transmission schedule on communication link 560.

The base station 505 transmits a capability indicator in a MAC IE. In one example, a base station 505 may transmit a downlink MAC IE, e.g., a 3-bit IE, indicating a maximum scheduled rank for a subsequent downlink schedule. A UE 515 adjusts its rank at 545 in anticipation of receiving subsequent downlink transmissions.

In another example, a base station 505 may transmit a downlink MAC IE, e.g., in a 3-bit IE, to indicate a downlink buffer status. A UE 515 uses this information to adjust its clock power or modem level at 545 to fit downlink throughput.

Referring to FIG. 6, in some examples not covered by the appended claims, the process flow 600 may commence with a communication link 665 between the base station 605 and the UE 615. The base station 605 may establish a connection with the UE 615 (e.g., performing a cell acquisition procedure, random access procedure, RRC connection procedure, RRC configuration procedure). At 626, the UE 605 may determine UE capability indicators. At 631, the UE 615 may transmit UE capability indicators to the base station 605. At 646, the base station 605 may adjust certain downlink parameter. Then, UE 615 may receive downlink transmissions on communication link 661.

For example, the UE 615 may transmit a capability indicator in a MAC IE. In one example, UE 615 may transmit an uplink MAC IE e.g. a 3-bit IE, indicating a maximum expected rank corresponding to a UE tune-away state, low delay service, low battery level, etc. A base station 605, upon receipt of this uplink capability indicator may adjust (e.g., lower) a downlink scheduled rank for a subsequent downlink transmission.

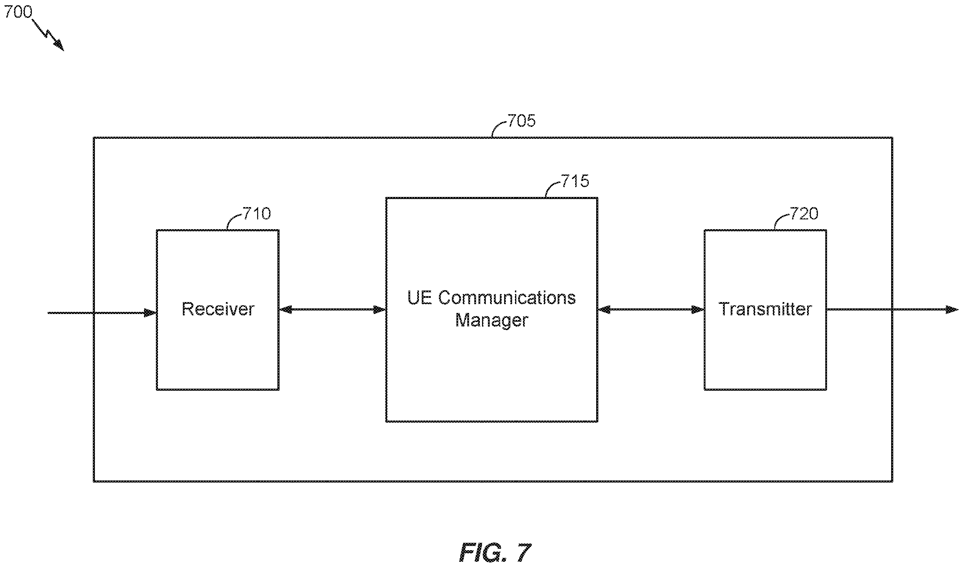

FIG. 7 illustrates an example block diagram that supports network aided power savings techniques for communications systems in accordance with aspects of the present disclosure. Wireless device 705 may be an example of aspects of a user equipment (UE) 115 as described herein. Wireless device 705 may include receiver 710, UE communications manager 715, and transmitter 720. Wireless device 705 may also include a processor. Each of these components may be in communication with one another (e.g., via one or more buses).

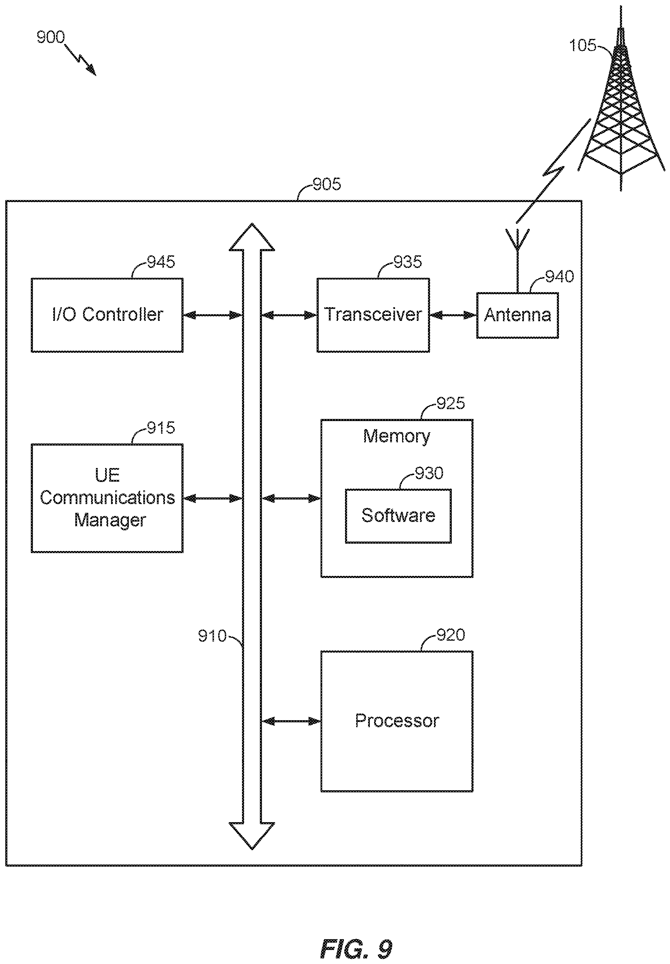

Receiver 710 may receive information such as packets, user data, or control information associated with various information channels (e.g., control channels, data channels, and information related to maximum allowed rank mapping, CQI reporting, throughput indicators, capability indicator, etc.) Information may be passed on to other components of the device. The receiver 710 may be an example of aspects of the transceiver 935 described with reference to FIG. 9. The receiver 710 may utilize a single antenna or a set of antennas.

UE communications manager 715 and/or at least some of its various subcomponents may be implemented in hardware, software executed by a processor, firmware, or any combination thereof. If implemented in software executed by a processor, the functions of the UE communications manager 715 and/or at least some of its various sub-components may be executed by a general-purpose processor, a digital signal processor (DSP), an application-specific integrated circuit (ASIC), an field-programmable gate array (FPGA) or other programmable logic device, discrete gate or transistor logic, discrete hardware components, or any combination thereof designed to perform the functions described in the present disclosure.

The UE communications manager 715 and/or at least some of its various sub-components may be physically located at various positions, including being distributed such that portions of functions are implemented at different physical locations by one or more physical devices. In some examples, UE communications manager 715 and/or at least some of its various sub-components may be a separate and distinct component in accordance with various aspects of the present disclosure. In other examples, UE communications manager 715 and/or at least some of its various subcomponents may be combined with one or more other hardware components, including but not limited to an I/O component, a transceiver, a network server, another computing device, one or more other components described in the present disclosure, or a combination thereof in accordance with various aspects of the present disclosure.

UE communications manager 715 determines to adjust at least one power savings parameter of wireless device 705 in advance of an expected receive transmission. UE communications manager 715 may determine to adjust a number of receive paths or a wireless device 705 clock power level, based on a capability message received by receiver 710.

Transmitter 720 may transmit signals generated by other components of the device. In some examples, the transmitter 720 may be collocated with a receiver 710 in a transceiver module. For example, the transmitter 720 may be an example of aspects of the transceiver 935 described with reference to FIG. 9. The transmitter 720 may utilize a single antenna or a set of antennas.

Transmitter 720 may transmit a UE capability message or an indication of a wireless device 705 state based on determining the UE capability.

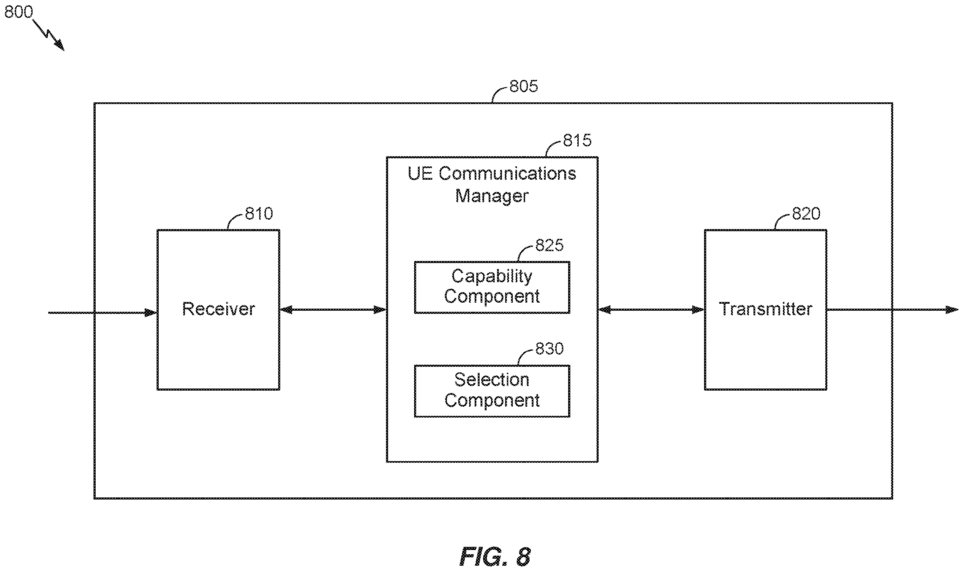

FIG. 8 shows a block diagram 800 of a wireless device 805 that supports network aided power savings techniques for communications systems in accordance with aspects of the present disclosure. Wireless device 805 may be an example of aspects of a wireless device 705 or a UE 115 as described with reference to FIG. 7. Wireless device 805 may include receiver 810, UE communications manager 815, and transmitter 820. Wireless device 805 may also include a processor. Each of these components may be in communication with one another (e.g., via one or more buses).

Receiver 810 may receive information such as packets, user data, or control information associated with various information channels (e.g., control channels, data channels, and information related to maximum allowed rank mapping, CQI reporting, throughput indicators, capability indicator, etc.) Information may be passed on to other components of the device. The receiver 810 may be an example of aspects of the transceiver 935 described with reference to FIG. 9. The receiver 810 may utilize a single antenna or a set of antennas.

UE communications manager 815 may be an example of aspects of the UE communications manager 715 described with reference to FIG. 7. UE communications manager 815 may also include capability component 825 and selection component 830.

Capability component 825 may determine a capability (a minimum or maximum receiving rank) or a state of the UE (such as a 5G tune-away state, low delay service, low or high battery state, etc).

Selection component 830 may select maximum allowed rank for the UE, or a clock power level for the UE. The selection component 830 may monitor a downlink control channel for a message including a UE capability message and selection component 830 may select a maximum allowed rank from a mapping table.

Transmitter 820 may transmit signals generated by other components of the device. In some examples, the transmitter 820 may be collocated with a receiver 810 in a transceiver module. For example, the transmitter 820 may be an example of aspects of the transceiver 735 described with reference to FIG. 7. The transmitter 820 may utilize a single antenna or a set of antennas.

FIG. 9 shows a diagram of a system 900 including a device 905 that supports network aided power savings techniques for communications systems in accordance with aspects of the present disclosure. Device 905 may be an example of or include the components of wireless device 705, wireless device 805, or a UE 115 as described above, e.g., with reference to FIGs. 7 and 8. Device 905 may include components for bidirectional voice and data communications including components for transmitting and receiving communications, including UE communications manager 915, processor 920, memory 925, software 930, transceiver 935, antenna 940, and I/O controller 945. These components may be in electronic communication via one or more buses (e.g., bus 910). Device 905 may communicate wirelessly with one or more base stations 105.

Processor 920 may include an intelligent hardware device, (e.g., a general-purpose processor, a DSP, a central processing unit (CPU), a microcontroller, an ASIC, an FPGA, a programmable logic device, a discrete gate or transistor logic component, a discrete hardware component, or any combination thereof). In some cases, processor 920 may be configured to operate a memory array using a memory controller. In other cases, a memory controller may be integrated into processor 920. Processor 920 may be configured to execute computer-readable instructions stored in a memory to perform various functions (e.g., functions or tasks supporting network aided power saving techniques).

Memory 925 may include random access memory (RAM) and read only memory (ROM). The memory 925 may store computer-readable, computer-executable software 930 including instructions that, when executed, cause the processor to perform various functions described herein. In some cases, the memory 925 may contain, among other things, a basic input/output system (BIOS) which may control basic hardware or software operation such as the interaction with peripheral components or devices.

Software 930 may include code to implement aspects of the present disclosure, including code to support modulation table determination and CQI reporting. Software 930 may be stored in a non-transitory computer-readable medium such as system memory or other memory. In some cases, the software 930 may not be directly executable by the processor but may cause a computer (e.g., when compiled and executed) to perform functions described herein.

Transceiver 935 may communicate bi-directionally, via one or more antennas, wired, or wireless links as described above. For example, the transceiver 935 may represent a wireless transceiver and may communicate bi-directionally with another wireless transceiver. The transceiver 935 may also include a modem to modulate the packets and provide the modulated packets to the antennas for transmission, and to demodulate packets received from the antennas. In some cases, the wireless device may include a single antenna 940. However, in some cases the device may have more than one antenna 940, which may be capable of concurrently transmitting or receiving multiple wireless transmissions.

I/O controller 945 may manage input and output signals for device 905. I/O controller 945 may also manage peripherals not integrated into device 905. In some cases, I/O controller 945 may represent a physical connection or port to an external peripheral. In some cases, I/O controller 945 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, I/O controller 945 may represent or interact with a modem, a keyboard, a mouse, a touchscreen, or a similar device. In some cases, I/O controller 945 may be implemented as part of a processor. In some cases, a user may interact with device 905 via I/O controller 945 or via hardware components controlled by I/O controller 945.

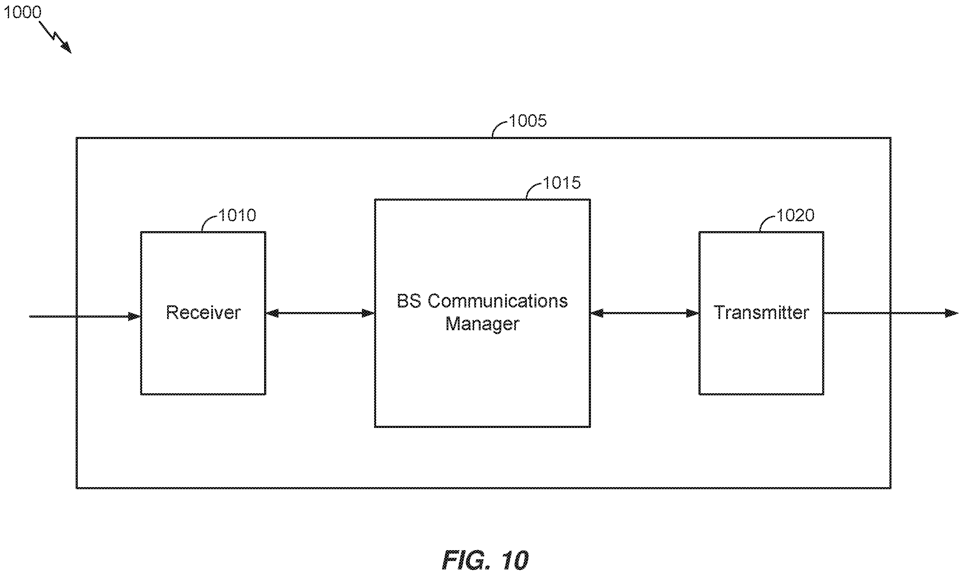

FIG. 10 shows a block diagram 1000 of a wireless device 1005 that supports network aided power savings techniques for communications systems in accordance with aspects of the present disclosure. Wireless device 1005 may be an example of aspects of a base station 105 as described herein. Wireless device 1005 may include receiver 1010, base station communications manager 1015, and transmitter 1020. Wireless device 1005 may also include a processor. Each of these components may be in communication with one another (e.g., via one or more buses).

Receiver 1010 may receive information such as packets, user data, throughput indicators, or control information associated with various information channels (e.g., control channels, data channels, and information related to maximum allowed rank mapping, CQI reporting, throughput indicators, capability indicator, etc.) Information may be passed on to other components of the device. The receiver 1010 may be an example of aspects of the transceiver 935 described with reference to FIG. 9. The receiver 1010 may utilize a single antenna or a set of antennas.

Receiver 1010 may receive a UE capability message, channel throughput information, or a UE state (e.g. a 5G tune-away state, low delay service, low or high battery state).

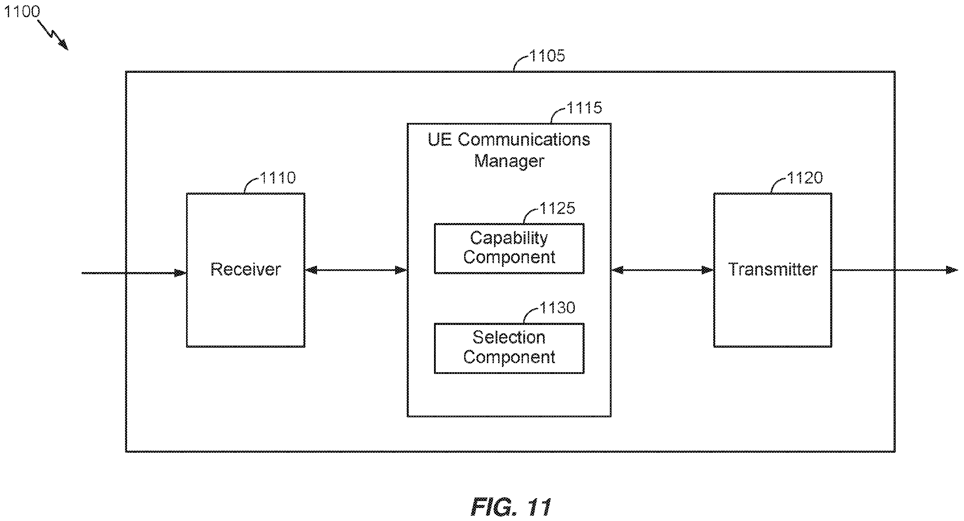

Base station communications manager 1015 may be an example of aspects of the base station communications manager 1115 described with reference to FIG. 11. Base station communications manager 1015 and/or at least some of its various subcomponents may be implemented in hardware, software executed by a processor, firmware, or any combination thereof. If implemented in software executed by a processor, the functions of the base station communications manager 1015 and/or at least some of its various sub-components may be executed by a general-purpose processor, a DSP, an ASIC, an FPGA or other programmable logic device, discrete gate or transistor logic, discrete hardware components, or any combination thereof designed to perform the functions described in the present disclosure.

The base station communications manager 1015 and/or at least some of its various sub-components may be physically located at various positions, including being distributed such that portions of functions are implemented at different physical locations by one or more physical devices. In some examples, base station communications manager 1015 and/or at least some of its various sub-components may be a separate and distinct component in accordance with various aspects of the present disclosure. In other examples, base station communications manager 1015 and/or at least some of its various sub-components may be combined with one or more other hardware components, including but not limited to an I/O component, a transceiver, a network server, another computing device, one or more other components described in the present disclosure, or a combination thereof in accordance with various aspects of the present disclosure.

Base station communications manager 1015 generates a capability indicator based on an estimated downlink data volume.

Transmitter 1020 may transmit signals generated by other components of the device. In some examples, the transmitter 1020 may be collocated with a receiver 1010 in a transceiver module. For example, the transmitter 1020 may be an example of aspects of the transceiver 935 described with reference to FIG. 9. The transmitter 1020 may utilize a single antenna or a set of antennas. Transmitter 1020 may transmit a message including capability indicator message.

FIG. 11 shows a block diagram 1100 of a wireless device 1105 that supports network aided power savings techniques for communications systems in accordance with aspects of the present disclosure. Wireless device 1105 may be an example of aspects of a wireless device 1005 or a base station 105 as described with reference to FIG.10. Wireless device 1105 may include receiver 1110, base station communications manager 1115, and transmitter 1120. Wireless device 1105 may also include a processor. Each of these components may be in communication with one another (e.g., via one or more buses).

Receiver 1110 may receive information such as packets, user data, or control information associated with various information channels (e.g., control channels, data channels, and information related to maximum allowed rank mapping, CQI reporting, throughput indicators, capability indicator, etc.). Information may be passed on to other components of the device. The receiver 1110 may utilize a single antenna or a set of antennas.

BS communications manager 1015 and/or at least some of its various subcomponents may be implemented in hardware, software executed by a processor, firmware, or any combination thereof. If implemented in software executed by a processor, the functions of the BS communications manager 1015 and/or at least some of its various sub-components may be executed by a general-purpose processor, a digital signal processor (DSP), an application-specific integrated circuit (ASIC), an field-programmable gate array (FPGA) or other programmable logic device, discrete gate or transistor logic, discrete hardware components, or any combination thereof designed to perform the functions described in the present disclosure.

The BS communications manager 1115 and/or at least some of its various sub-components may be physically located at various positions, including being distributed such that portions of functions are implemented at different physical locations by one or more physical devices. In some examples, BS communications manager 1115 and/or at least some of its various sub-components may be a separate and distinct component in accordance with various aspects of the present disclosure. In other examples, BS communications manager 1115 and/or at least some of its various subcomponents may be combined with one or more other hardware components, including but not limited to an I/O component, a transceiver, a network server, another computing device, one or more other components described in the present disclosure, or a combination thereof in accordance with various aspects of the present disclosure.

BS communications manager 1115 may determine downlink data throughput indicators. BS communications manager 1115 generates a capability indicator based on an estimated downlink data throughput indicators.

Transmitter 1120 may transmit signals generated by other components of the device. In some examples, the transmitter 1120 may be collocated with a receiver 1110 in a transceiver module. The transmitter 1120 may utilize a single antenna or a set of antennas. Transmitter 1120 may transmit a capability message to a receiving device.

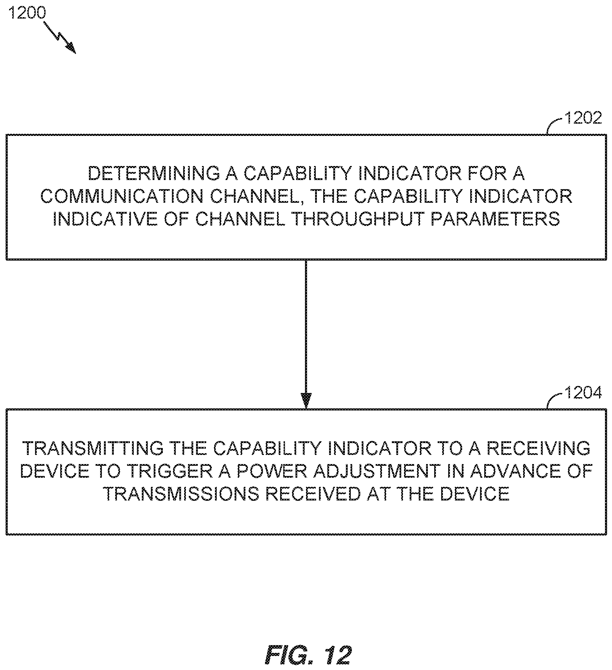

FIG. 12 shows a flowchart illustrating a method 1200 for network aided power savings techniques for communications systems in accordance with aspects of the present disclosure. The operations of method 1100 may be implemented by a base station 205 or its components as described herein. For example, the operations of method 1200 may be performed by a BS communications manager as described with reference to FIGs. 10 and 11. In some examples, a BS 205 may execute a set of codes to control the functional elements of the device to perform the functions described below.

At 1202 the BS 205 estimates a capability indicator for a communications channel, the capability indicator indicative of channel throughput parameters. The operations of 1202 may be performed according to the methods described herein. In certain examples, aspects of the operations of 1202 may be performed by a capability component as described with reference to FIGs. 10 and 11.

At 1204 the BS 205 transmits the capability indicator to a receiving device to trigger a power adjustment in advance of transmissions received at the device. The operations of 1204 may be performed according to the methods described herein. In certain examples, aspects of the operations of 1204 may be performed by a transmitter as described with reference to FIGs. 10 and 11.

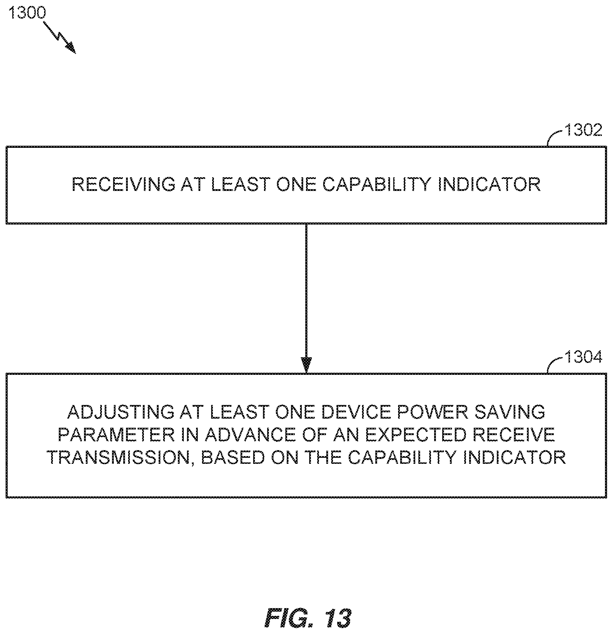

FIG. 13 shows a flowchart illustrating a method 1300 for network aided power savings techniques for communications systems in accordance with aspects of the present disclosure. The operations of method 1300 may be implemented by a UE 215 or its components as described herein. For example, the operations of method 1300 may be performed by a UE communications manager as described with reference to FIGs. 7 and 8. In some examples, UE 215 may execute a set of codes to control the functional elements of the device to perform the functions described below.

At 1302 the UE 215 receives at least one capability indicator. The operations of 1302 may be performed according to the methods described herein. In certain examples, aspects of the operations of 1302 may be performed by a capability component as described with reference to FIGs. 7 and 8.

At 1304 the UE 215 adjusts at least one power savings parameter in advance of an expected receive transmission based on the capability indicator. The operations of 1304 may be performed according to the methods described herein. In certain examples, aspects of the operations of 1304 may be performed by a transmitter as described with reference to FIGs. 7 and 8.

It should be noted that the methods described above describe possible implementations, and that the operations and the steps may be rearranged or otherwise modified and that other implementations are possible. Further, aspects from two or more of the methods may be combined.

Techniques described herein may be used for various wireless communications systems such as code division multiple access (CDMA), time division multiple access (TDMA), frequency division multiple access (FDMA), orthogonal frequency division multiple access (OFDMA), single carrier frequency division multiple access (SC-FDMA), and other systems. A CDMA system may implement a radio technology such as CDMA2000, Universal Terrestrial Radio Access (UTRA), etc. CDMA2000 covers IS-2000, IS-95, and IS-856 standards. IS-2000 Releases may be commonly referred to as CDMA2000 1X, 1X, etc. IS-856 (TIA-856) is commonly referred to as CDMA2000 1xEV-DO, High Rate Packet Data (HRPD), etc. UTRA includes Wideband CDMA (WCDMA) and other variants of CDMA. A TDMA system may implement a radio technology such as Global System for Mobile Communications (GSM).

An OFDMA system may implement a radio technology such as Ultra Mobile Broadband (UMB), Evolved UTRA (E-UTRA), Institute of Electrical and Electronics Engineers (IEEE) 802.11 (Wi-Fi), IEEE 802.16 (WiMAX), IEEE 802.20, Flash-OFDM, etc. UTRA and E-UTRA are part of Universal Mobile Telecommunications System (UMTS). LTE, LTE-A, and LTE-A Pro are releases of UMTS that use E-UTRA. UTRA, E-UTRA, UMTS, LTE, LTE-A, LTE-A Pro, NR, and GSM are described in documents from the organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies. While aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR applications.

A macro cell generally covers a relatively large geographic area (e.g., several kilometers in radius) and may allow unrestricted access by UEs 115 with service subscriptions with the network provider. A small cell may be associated with a lowerpowered base station 105, as compared with a macro cell, and a small cell may operate in the same or different (e.g., licensed, unlicensed, etc.) frequency bands as macro cells. Small cells may include pico cells, femto cells, and micro cells according to various examples. A pico cell, for example, may cover a small geographic area and may allow unrestricted access by UEs 115 with service subscriptions with the network provider. A femto cell may also cover a small geographic area (e.g., a home) and may provide restricted access by UEs 115 having an association with the femto cell (e.g., UEs 115 in a closed subscriber group (CSG), UEs 115 for users in the home, and the like). An eNB for a macro cell may be referred to as a macro eNB. An eNB for a small cell may be referred to as a small cell eNB, a pico eNB, a femto eNB, or a home eNB. An eNB may support one or multiple (e.g., two, three, four, and the like) cells, and may also support communications using one or multiple component carriers.

The system 100 or systems described herein may support synchronous or asynchronous operation. For synchronous operation, the base stations 105 may have similar frame timing, and transmissions from different base stations 105 may be approximately aligned in time. For asynchronous operation, the base stations 105 may have different frame timing, and transmissions from different base stations 105 may not be aligned in time. The techniques described herein may be used for either synchronous or asynchronous operations.

Information and signals described herein may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a digital signal processor (DSP), an application-specific integrated circuit (ASIC), a field-programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that can be accessed by a general purpose or special purpose computer. By way of example, and not limitation, non-transitory computer-readable media may comprise random-access memory (RAM), read-only memory (ROM), electrically erasable programmable read only memory (EEPROM), flash memory, compact disk (CD) ROM or other optical disk storage, magnetic disk storage or other magnetic storage devices, or any other non-transitory medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and devices are shown in block diagram form in order to avoid obscuring the concepts of the described examples.

The description herein is provided to enable a person skilled in the art to make or use the disclosure. Various modifications to the disclosure will be readily apparent to those skilled in the art, and the generic principles defined herein may be applied to other variations without departing from the scope of the disclosure as defined by the appended claims. Thus, the disclosure is not limited to the examples and designs described herein, but is to be accorded the broadest scope consistent with the principles and novel features disclosed herein.

## Claims

1. A method of wireless communication performed by a base station, BS (105; 205; 1005; 1105), comprising:
determining (525; 1202) at least one capability indicator for a communication channel, the at least one capability indicator indicative of channel throughput parameters; and
transmitting (530; 1204) the at least one capability indicator to a user equipment, UE (115; 215; 705; 805; 905), to trigger a power adjustment in advance of downlink transmissions received at the UE,
wherein the at least one capability indicator is at least one information element, IE, transmitted in a downlink MAC message, and
wherein the at least one capability indicator comprises a maximum downlink schedule rank for the communication channel or a downlink buffer status.

2. A method of wireless communication performed by a user equipment, UE (115; 215; 705; 805; 905), comprising:
receiving (530; 1302) at least one capability indicator; and
adjusting (545; 1304) at least one UE power saving parameter in advance of an expected receive transmission, based on the at least one capability indicator,
wherein the method further comprises:
adjusting (545; 1304) a number of receive paths based on a maximum downlink schedule rank received in the at least one capability indicator; or
adjusting (545; 1304) a clock power level based on a downlink buffer status received in the at least one capability indicator.

3. The method of claim 2, further comprising:
performing a measurement to identify one or more metrics; and
determining a code rate for a subband of a downlink control channel based on the measurement.

4. The method of claim 3, further comprising:
determining one of a channel quality indicator, a pre-coding matrix indicator, a precoding type indicator, or a rank indicator.

5. The method of claim 2, further comprising:
adjusting (545) a power mode based on channel throughput information received in the at least one capability indicator.

6. The method of claim 2, further comprising:
receiving the expected receive transmission at a maximum rank for an assigned period of time.

7. A equipment apparatus, UE (115; 215; 705; 805; 905), comprising:
a processor (920),
memory (925) in electronic communication with the processor; and
instructions stored in the memory and executable by the processor to cause the apparatus to:
receive (530) at least one capability indicator; and
adjust (545) at least one UE power saving parameter in advance of an expected receive transmission, based on the at least one capability indicator,
wherein the instructions are further executable by the processor to cause the apparatus to:
adjust (545) a number of receive paths based on a maximum downlink schedule rank received in the at least one capability indicator; or
adjust (545) a clock power level based on a downlink buffer status received in the at least one capability indicator.

8. The apparatus of claim 7, wherein the instructions are further executable by the processor to cause the apparatus to:
perform a measurement to identify one or more metrics; and
determine a code rate for a subband of a downlink control channel based on the measurement.

9. The apparatus of claim 8, wherein the instructions are further executable by the processor to cause the apparatus to:
determine one of a channel quality indicator, a pre-coding matrix indicator, a precoding type indicator, or a rank indicator.

10. The apparatus of claim 7, wherein the instructions are further executable by the processor to cause the apparatus to:
adjust (545) a power mode based on channel throughput information received in the at least one capability indicator.

11. The apparatus of claim 7, wherein the instructions are further executable by the processor to cause the apparatus to:
receive the expected receive transmission at a maximum rank for an assigned period of time.

12. A base station apparatus, BS (105; 205; 1005; 1105), comprising:
a processor,
memory in electronic communication with the processor; and
instructions stored in the memory and executable by the processor to cause the apparatus to:
determine (525; 1202) at least one capability indicator for a communication channel, the at least one capability indicator indicative of channel throughput parameters; and
transmit (530; 1204) the at least one capability indicator to a user equipment, UE (115; 215; 705; 805; 905), to trigger a power adjustment in advance of downlink transmissions received at the UE,
wherein the at least one capability indicator is at least one information element, IE, transmitted in a downlink MAC message, and
wherein the at least one capability indicator comprises a maximum downlink schedule rank for the communication channel or a downlink buffer status.

13. A non-transitory computer-readable medium storing code for wireless communication at a user equipment, UE (115; 215; 705; 805; 905), comprising instructions executable by a processor of the UE to cause the processor to:
receive (530) at least one capability indicator; and
adjust (545) at least one UE power saving parameter in advance of an expected receive transmission, based on the at least one capability indicator,
wherein adjusting (545) the at least one UE power saving parameter comprises:
adjusting (545) a number of receive paths based on a maximum downlink schedule rank received in the at least one capability indicator; or
adjusting (545) a clock power level based on a downlink buffer status received in the at least one capability indicator.

14. A non-transitory computer-readable medium storing code for wireless communication at a base station, BS (105; 205; 1005; 1105), comprising instructions executable by a processor of the BS to cause the processor to:
determine (525; 1202) at least one capability indicator for a communication channel, the at least one capability indicator indicative of channel throughput parameters; and
transmit (530; 1204) the at least one capability indicator to a user equipment, UE (115; 215; 705; 805; 905), to trigger a power adjustment in advance of downlink transmissions received at the UE,
wherein the at least one capability indicator is at least one information element, IE, transmitted in a downlink MAC message, and
wherein the at least one capability indicator comprises a maximum downlink schedule rank for the communication channel or a downlink buffer status.

## Patentansprüche

1. Verfahren zur drahtlosen Kommunikation, das durch eine Basisstation, BS (105; 205; 1005; 1105), ausgeführt wird, umfassend:
Bestimmen (525; 1202) zumindest eines Fähigkeitsindikators für einen Kommunikationskanal, wobei der zumindest eine Fähigkeitsindikator Kanaldurchsatzparameter angibt; und
Übertragen (530; 1204) des zumindest einen Fähigkeitsindikators an ein Benutzergerät, UE (115; 215; 705; 805; 905), um eine Leistungsanpassung auszulösen, die vorherig zu bei dem UE empfangene Downlink-Übertragungen ist,
wobei der zumindest eine Fähigkeitsindikator zumindest ein Informationselement, IE, ist, das in einer Downlink-MAC-Nachricht übertragen wird, und
wobei der zumindest eine Fähigkeitsindikator einen maximalen Downlink-Schedule-Rang für den Kommunikationskanal oder einen Downlink-Pufferstatus umfasst.

2. Verfahren zur drahtlosen Kommunikation, das durch ein Benutzergerät, UE (115; 215; 705; 805; 905), ausgeführt wird, umfassend:
Empfangen (530; 1302) zumindest eines Fähigkeitsindikators; und
Anpassen (545; 1304) zumindest eines UE-Leistungseinsparungsparameters, der vorherig zu einem erwarteten Empfang einer Übertragung ist, basierend auf dem zumindest einen Fähigkeitsindikator,
wobei das Verfahren weiterhin umfasst:
Anpassen (545; 1304) einer Anzahl von Empfangspfaden basierend auf einem maximalen Downlink-Schedule-Rang, der in dem zumindest einen Fähigkeitsindikator empfangen wird; oder
Anpassen (545; 1304) eines Taktleistungspegels basierend auf einem Downlink-Pufferstatus, der in dem zumindest einen Fähigkeitsindikator empfangen wird.

3. Verfahren gemäß Anspruch 2, weiterhin umfassend:
Ausführen einer Messung, um eine oder mehrere Metriken zu identifizieren; und
Bestimmen einer Coderate für ein Teilband eines Downlink-Kontrollkanals basierend auf der Messung.

4. Verfahren gemäß Anspruch 3, weiterhin umfassend:
Bestimmen eines Kanalqualitätsindikators, eines Vorcodierungsmatrixindikators, eines Vorcodierungstypindikators oder eines Rangindikators.

5. Verfahren gemäß Anspruch 2, weiterhin umfassend:
Anpassen (545) eines Leistungsmodus basierend auf Kanaldurchsatzinformation, die in dem zumindest einen Fähigkeitsindikator empfangen wird.

6. Verfahren gemäß Anspruch 2, weiterhin umfassend:
Empfangen der erwarteten Empfangsübertragung bei einem maximalen Rang für eine zugewiesene Zeitperiode.

7. Benutzergerät-Vorrichtung, UE (115; 215; 705; 805; 905), umfassend:
einen Prozessor (920),
Speicher (925) in elektronischer Kommunikation mit dem Prozessor; und
Anweisungen, die in dem Speicher gespeichert und durch den Prozessor ausführbar sind, um die Vorrichtung zu Folgendem zu veranlassen:
Empfangen (530) zumindest eines Fähigkeitsindikators; und
Anpassen (545) zumindest eines UE-Leistungseinsparungsparameters, der vorherig zu einem erwarteten Empfang einer Übertragung ist, basierend auf dem zumindest einen Fähigkeitsindikator,
wobei die Anweisungen weiterhin durch den Prozessor ausführbar sind, um die Vorrichtung zu Folgendem zu veranlassen:
Anpassen (545) einer Anzahl von Empfangspfaden basierend auf einem maximalen Downlink-Schedule-Rang, der in dem zumindest einen Fähigkeitsindikator empfangen wird; oder
Anpassen (545) eines Taktleistungspegels basierend auf einem Downlink-Pufferstatus, der in dem zumindest einen Fähigkeitsindikator empfangen wird.

8. Vorrichtung gemäß Anspruch 7, wobei die Anweisungen weiterhin durch den Prozessor ausführbar sind, um die Vorrichtung zu Folgendem zu veranlassen:
Ausführen einer Messung, um eine oder mehrere Metriken zu identifizieren; und
Bestimmen einer Coderate für ein Teilband eines Downlink-Kontrollkanals basierend auf der Messung.

9. Vorrichtung gemäß Anspruch 8, wobei die Anweisungen weiterhin durch den Prozessor ausführbar sind, um die Vorrichtung zu Folgendem zu veranlassen:
Bestimmen eines Kanalqualitätsindikators, eines Vorcodierungsmatrixindikators eines Vorcodierungstypindikators oder eines Rangindikators.

10. Vorrichtung gemäß Anspruch 7, wobei die Anweisungen weiterhin durch den Prozessor ausführbar sind, um die Vorrichtung zu Folgendem zu veranlassen:
Anpassen (545) eines Leistungsmodus basierend auf Kanaldurchsatzinformation, die in dem zumindest einen Fähigkeitsindikator empfangen wird.

11. Vorrichtung gemäß Anspruch 7, wobei die Anweisungen weiterhin durch den Prozessor ausführbar sind, um die Vorrichtung zu Folgendem zu veranlassen:
Empfangen der erwarteten Empfangsübertragung bei einem maximalen Rang für eine zugewiesene Zeitperiode.

12. Basisstations-Vorrichtung, BS (105; 205; 1005; 1105), umfassend:
einen Prozessor,
Speicher in elektronischer Kommunikation mit dem Prozessor; und
Anweisungen, die in dem Speicher gespeichert und durch den Prozessor ausführbar sind, um
die Vorrichtung zu Folgendem zu veranlassen:
Bestimmen (525; 1202) zumindest eines Fähigkeitsindikators für einen Kommunikationskanal, wobei der zumindest eine Fähigkeitsindikator Kanaldurchsatzparameter angibt; und
Übertragen (530; 1204) des zumindest einen Fähigkeitsindikators an ein Benutzergerät, UE (115; 215; 705; 805; 905), um eine Leistungsanpassung auszulösen, die vorherig zu bei dem UE empfangene Downlink-Übertragungen ist,
wobei der zumindest eine Fähigkeitsindikator zumindest ein Informationselement, IE, ist, das in einer Downlink-MAC-Nachricht übertragen wird, und
wobei der zumindest eine Fähigkeitsindikator einen maximalen Downlink-Schedule-Rang für den Kommunikationskanal oder einen Downlink-Pufferstatus umfasst.

13. Nichtflüchtiges computerlesbares Medium, das Code zur drahtlosen Kommunikation bei einem Benutzergerät, UE (115; 215; 705; 805; 905), speichert, umfassend Anweisungen, die durch einen Prozessor des UE ausführbar sind, um den Prozessor zu Folgendem zu veranlassen:
Empfangen (530) zumindest eines Fähigkeitsindikators; und
Anpassen (545) zumindest eines UE-Leistungseinsparungsparameters, der vorherig zu einem erwarteten Empfang einer Übertragung ist, basierend auf dem zumindest einen Fähigkeitsindikator,
wobei das Anpassen (545) des zumindest einen UE-Leistungseinsparungsparameters umfasst:
Anpassen (545) einer Anzahl von Empfangspfaden basierend auf einem maximalen Downlink-Schedule-Rang, der in dem zumindest einen Fähigkeitsindikator empfangen wird; oder
Anpassen (545) eines Taktleistungspegels basierend auf einem Downlink-Pufferstatus, der in dem zumindest einen Fähigkeitsindikator empfangen wird.

14. Nichtflüchtiges computerlesbares Medium, das Code zur drahtlosen Kommunikation bei einer Basisstation, BS (105; 205; 1005; 1105), speichert, umfassend Anweisungen, die durch einen Prozessor der BS ausführbar sind, um den Prozessor zu Folgendem zu veranlassen:
Bestimmen (525; 1202) zumindest eines Fähigkeitsindikators für einen Kommunikationskanal, wobei der zumindest eine Fähigkeitsindikator Kanaldurchsatzparameter angibt; und
Übertragen (530; 1204) des zumindest einen Fähigkeitsindikators an ein Benutzergerät, UE (115; 215; 705; 805; 905), um eine Leistungsanpassung auszulösen, die vorherig zu bei dem UE empfangene Downlink-Übertragungen ist,
wobei der zumindest eine Fähigkeitsindikator zumindest ein Informationselement, IE, ist, das in einer Downlink-MAC-Nachricht übertragen wird, und
wobei der zumindest eine Fähigkeitsindikator einen maximalen Downlink-Schedule-Rang für den Kommunikationskanal oder einen Downlink-Pufferstatus umfasst.

## Revendications

1. Un procédé de communication sans fil réalisé par une station de base, BS (105 ; 205 ; 1005 ; 1105), comprenant :
la détermination (525; 1202) d'au moins un indicateur de capacité pour un canal de communication, l'au moins un indicateur de capacité étant indicatif de paramètres de débit de canal ; et
la transmission (530; 1204) de l'au moins un indicateur de capacité à un équipement utilisateur, UE (115 ; 215 ; 705 ; 805 ; 905), pour déclencher un ajustement de puissance préalablement à des transmissions de liaison descendante reçues au niveau de l'UE,
dans lequel l'au moins un indicateur de capacité est au moins un élément d'information, IE, transmis dans un message MAC de liaison descendante, et
dans lequel l'au moins un indicateur de capacité comprend un rang maximal de planification de liaison descendante pour le canal de communication ou un état de mémoire tampon de liaison descendante.
s

2. Un procédé de communication sans fil réalisé par un équipement utilisateur, UE (115 ; 215 ; 705 ; 805 ; 905), comprenant :
la réception (530 ; 1302) d'au moins un indicateur de capacité ; et
l'ajustement (545 ; 1304) d'au moins un paramètre d'économie d'énergie d'UE préalablement à une transmission de réception prévue, sur la base de l'au moins un indicateur de capacité,
dans lequel le procédé comprend en outre :
l'ajustement (545 ; 1304) d'un nombre de trajets de réception sur la base d'un rang maximal de planification de liaison descendante reçu dans l'au moins un indicateur de capacité ; ou
l'ajustement (545 ; 1304) d'un niveau de puissance d'horloge sur la base d'un état de mémoire tampon de liaison descendante reçu dans l'au moins un indicateur de capacité.

3. Le procédé selon la revendication 2, comprenant en outre :
la réalisation d'une mesure pour identifier une ou plusieurs métriques ; et
la détermination d'un débit de code pour une sous-bande d'un canal de contrôle de liaison descendante sur la base de la mesure.

4. Le procédé selon la revendication 3, comprenant en outre :
la détermination d'un parmi un indicateur de qualité de canal, un indicateur de matrice de précodage, un indicateur de type de précodage ou un indicateur de rang.

5. Le procédé selon la revendication 2, comprenant en outre :
l'ajustement (545) d'un mode de puissance sur la base d'une information de débit de canal reçue dans l'au moins un indicateur de capacité.

6. Le procédé selon la revendication 2, comprenant en outre :
la réception de la transmission de réception prévue à un rang maximal pendant une période de temps attribuée.

7. Un appareil d'équipement utilisateur, UE (115 ; 215 ; 705 ; 805 ; 905), comprenant :
un processeur (920),
une mémoire (925) en communication électronique avec le processeur ; et
des instructions stockées dans la mémoire et exécutables par le processeur pour amener l'appareil à :
recevoir (530) au moins un indicateur de capacité ; et
ajuster (545) au moins un paramètre d'économie d'énergie d'UE préalablement à une transmission de réception prévue, sur la base de l'au moins un indicateur de capacité,
dans lequel les instructions sont en outre exécutables par le processeur pour amener l'appareil à :
ajuster (545) un nombre de trajets de réception sur la base d'un rang maximal de planification de liaison descendante reçu dans l'au moins un indicateur de capacité ; ou
ajuster (545) un niveau de puissance d'horloge sur la base d'un état de mémoire tampon de liaison descendante reçu dans l'au moins un indicateur de capacité.

8. L'appareil selon la revendication 7, dans lequel les instructions sont en outre exécutables par le processeur pour amener l'appareil à :
réaliser une mesure pour identifier une ou plusieurs métriques ; et
déterminer un débit de code pour une sous-bande d'un canal de contrôle de liaison descendante sur la base de la mesure.

9. L'appareil selon la revendication 8, dans lequel les instructions sont en outre exécutables par le processeur pour amener l'appareil à :
déterminer un parmi un indicateur de qualité de canal, un indicateur de matrice de précodage, un indicateur de type de précodage ou un indicateur de rang.

10. L'appareil selon la revendication 7, dans lequel les instructions sont en outre exécutables par le processeur pour amener l'appareil à :
ajuster (545) un mode de puissance sur la base d'une information de débit de canal reçue dans l'au moins un indicateur de capacité.

11. L'appareil selon la revendication 7, dans lequel les instructions sont en outre exécutables par le processeur pour amener l'appareil à :
recevoir la transmission de réception prévue à un rang maximal pendant une période de temps attribuée.

12. Un appareil de station de base, BS (105 ; 205 ; 1005 ; 1105), comprenant :
un processeur,
une mémoire en communication électronique avec le processeur ; et
des instructions stockées dans la mémoire et exécutables par le processeur pour amener l'appareil à :
déterminer (525; 1202) au moins un indicateur de capacité pour un canal de communication, l'au moins un indicateur de capacité étant indicatif de paramètres de débit de canal ; et
transmettre (530; 1204) l'au moins un indicateur de capacité à un équipement utilisateur, UE (115; 215; 705; 805; 905), pour déclencher un ajustement de puissance préalablement à des transmissions de liaison descendante reçues au niveau de l'UE,
dans lequel l'au moins un indicateur de capacité est au moins un élément d'information, IE, transmis dans un message MAC de liaison descendante, et
dans lequel l'au moins un indicateur de capacité comprend un rang maximal de planification de liaison descendante pour le canal de communication ou un état de mémoire tampon de liaison descendante.

13. Un support non transitoire lisible par calculateur stockant un code pour la communication sans fil au niveau d'un équipement utilisateur, UE (115 ; 215 ; 705 ; 805 ; 905), comprenant des instructions exécutables par un processeur de l'UE pour amener le processeur à :
recevoir (530) au moins un indicateur de capacité ; et
ajuster (545) au moins un paramètre d'économie d'énergie d'UE préalablement à une transmission de réception prévue, sur la base de l'au moins un indicateur de capacité,
dans lequel l'ajustement (545) de l'au moins un paramètre d'économie d'énergie d'UE comprend :
l'ajustement (545) d'un nombre de trajets de réception sur la base d'un rang maximal de planification de liaison descendante reçu dans l'au moins un indicateur de capacité ; ou
l'ajustement (545) d'un niveau de puissance d'horloge sur la base d'un état de mémoire tampon de liaison descendante reçu dans l'au moins un indicateur de capacité.

14. Un support non transitoire lisible par calculateur stockant un code pour la communication sans fil au niveau d'une station de base, BS (105 ; 205 ; 1005 ; 1105), comprenant des instructions exécutables par un processeur de l'UE pour amener le processeur à :
déterminer (525 ; 1202) au moins un indicateur de capacité pour un canal de communication, l'au moins un indicateur de capacité étant indicatif de paramètres de débit de canal ; et
transmettre (530 ; 1204) l'au moins un indicateur de capacité à un équipement utilisateur, UE (115 ; 215 ; 705 ; 805 ; 905), pour déclencher un ajustement de puissance préalablement à des transmissions de liaison descendante reçues au niveau de l'UE,
dans lequel l'au moins un indicateur de capacité est au moins un élément d'information, IE, transmis dans un message MAC de liaison descendante, et
dans lequel l'au moins un indicateur de capacité comprend un rang maximal de planification de liaison descendante pour le canal de communication ou un état de mémoire tampon de liaison descendante.
